(19) **Europäisches Patentamt European Patent Office Office européen des brevets**

(11) **EP 4 462 924 A1**

(12) **EUROPEAN PATENT APPLICATION**
published in accordance with Art. 153(4) EPC

(43) Date of publication:
**13.11.2024 Bulletin 2024/46**

(21) Application number: **22919061.6**

(22) Date of filing: **20.12.2022**

(51) International Patent Classification (IPC):
**H04W 72/21** (2023.01)   **H04W 72/23** (2023.01)
**H04W 72/04** (2023.01)   **H04B 7/06** (2006.01)
**H04B 7/0413** (2017.01)

(52) Cooperative Patent Classification (CPC):
**H04B 7/0413; H04B 7/06; H04W 72/04;
H04W 72/21; H04W 72/23**

(86) International application number:
**PCT/KR2022/020805**

(87) International publication number:
**WO 2023/132524 (13.07.2023 Gazette 2023/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.01.2022 KR 20220002919**

(71) Applicant: **LG Electronics Inc.**
**Yeongdeungpo-gu
Seoul 07336 (KR)**

(72) Inventors:
• **KANG, Jiwon**
  **Seoul 06772 (KR)**
• **GO, Seongwon**
  **Seoul 06772 (KR)**
• **PARK, Haewook**
  **Seoul 06772 (KR)**
• **CHUNG, Jaehoon**
  **Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **METHOD AND DEVICE FOR PERFORMING UPLINK TRANSMISSION AND RECEPTION IN WIRELESS COMMUNICATION SYSTEM**

(57)    Disclosed are a method and device for performing uplink transmission and reception in a wireless communication system. A method performed by a terminal, according to one embodiment of the present disclosure, may comprise the steps of: performing a report on indication information on one or more downlink (DL) reference resources including a plurality of indexes for the terminal; in relation to a response to the report, receiving information associated with a specific index from among the plurality of indexes; and performing uplink transmission on the basis of the specific index. Here, the plurality of indexes may be related to the number of sounding reference signal (SRS) ports.

**FIG.16**

START

Perform reporting on indication information on one or more DL reference resources including a plurality of indexes for UE — S1610

Receive information associated with a specific index among the plurality of indexes — S1620

Perform UL transmission based on the specific index — S1630

END

EP 4 462 924 A1

**Description**

[Technical Field]

The present disclosure relates to a wireless communication system, and more specifically, to a method and device for performing uplink transmission and reception in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical object of the present disclosure is to provide a method and device for performing uplink transmission and reception in a wireless communication system.

Additionally, an additional technical object of the present disclosure is to provide a method and device for identifying a panel-related beam report and explicitly/implicitly transmitting information on the panel to which it will be applied.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an embodiment of the present discosure may comprise: performing reporting on indication information on one or more downlink (DL) reference resources including a plurality of indexes for the UE; receiving information associated with a specific index among the plurality of indexes, in relation to a response to the reporting; and performing uplink transmission based on the specific index. Herein, the plurality of indexes may be related to a number of a sounding reference signal (SRS) ports.

A method performed by a base station in a wireless communication system according to an additional embodiment of the present discosure may comprise: receiving reporting on indication information on one or more downlink (DL) reference resources including a plurality of indexes for a user equipment (UE); transmitting information associated with a specific index among the plurality of indexes, in relation to a response to the reporting; and performing uplink reception based on the specific index. Herein, the plurality of indexes may be related to a number of a sounding reference signal (SRS) ports.

[Technical Effects]

According to an embodiment of the present disclosure, a method and device for performing uplink transmission and reception in a wireless communication system may be provided.

Additionally, according to an embodiment of the present disclosure, a method and device for identifying a panel-related beam report and explicitly/implicitly transmitting information about the panel to which it will be applied may be provided.

Additionally, according to one embodiment of the present disclosure, there is an advantage in that ambiguity regarding subsequent configuration/indication is eliminated as the understanding of the panel (or panel type) between the base station and the UE is consistent.

Additionally, according to one embodiment of the present disclosure, there is an advantage in terms of power saving because it is possible to turn off unnecessary panels (or panel types) of the UE.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram illustrating a downlink beam management operation in a wireless communication system to which the present disclosure may be applied.

FIG. 8 is a diagram illustrating a downlink beam management procedure using SSB in a wireless communication system to which the present disclosure may be applied.

FIG. 9 is a diagram illustrating a downlink beam management operation using CSI-RS in a wireless communication system to which the present disclosure may be applied.

FIG. 10 is a diagram illustrating a process for determining a reception beam of a terminal in a wireless communication system to which the present disclosure may be applied.

FIG. 11 is a diagram illustrating a transmission beam determination process of a base station in a wireless communication system to which the present disclosure may be applied.

FIG. 12 is a diagram illustrating resource allocation in time and frequency domains related to the operation of downlink beam management in a wireless communication system to which the present disclosure may be applied.

FIG. 13 is a diagram illustrating an uplink beam management operation using SRS in a wireless communication system to which the present disclosure may be applied.

FIG. 14 is a diagram illustrating an uplink beam management procedure in a wireless communication system to which the present disclosure may be applied.

FIG. 15 illustrates a signaling procedure between a base station and a UE according to an embodiment of the present disclosure.

FIG. 16 is a diagram illustrating the operation of a UE for an uplink transmission and reception method according to an embodiment of the present disclosure.

FIG. 17 is a diagram illustrating the operation of a base station for an uplink transmission and reception method according to an embodiment of the present disclosure.

FIG. 18 is a diagram illustrating a block configuration of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management

CQI: Channel Quality Indicator

CRI: channel state information - reference signal resource indicator

CSI: channel state information

CSI-IM: channel state information - interference measurement

CSI-RS: channel state information - reference signal

DMRS: demodulation reference signal

FDM: frequency division multiplexing

FFT: fast Fourier transform

IFDMA: interleaved frequency division multiple access

IFFT: inverse fast Fourier transform

L1-RSRP: Layer 1 reference signal received power

L1-RSRQ: Layer 1 reference signal received quality

MAC: medium access control

NZP: non-zero power

OFDM: orthogonal frequency division multiplexing

PDCCH: physical downlink control channel

PDSCH: physical downlink shared channel

PMI: precoding matrix indicator

RE: resource element

RI: Rank indicator

RRC: radio resource control

RSSI: received signal strength indicator

Rx: Reception

QCL: quasi co-location

SINR: signal to interference and noise ratio

SSB (or SS/PBCH block): Synchronization signal block (including PSS (primary synchronization signal), SSS (secondary synchronization signal) and PBCH (physical broadcast channel))

TDM: time division multiplexing

TRP: transmission and reception point

TRS: tracking reference signal

Tx: transmission

UE: user equipment

ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

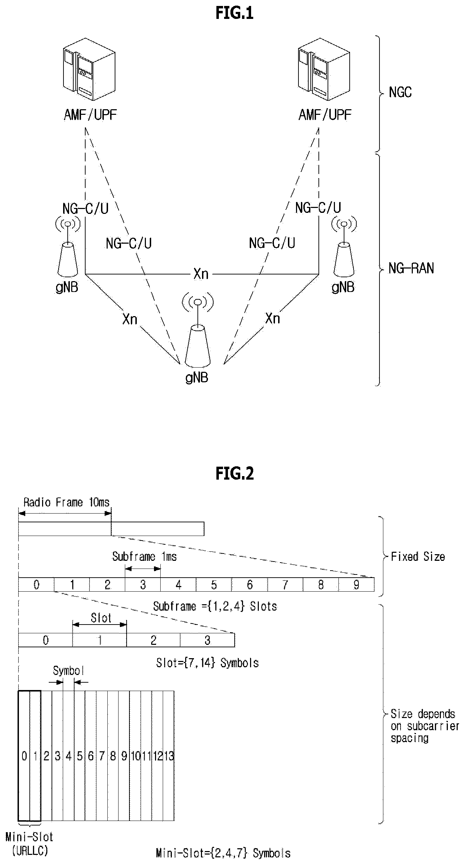

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f=1/(\Delta f_{max} N_f/100) \cdot T_c=10$ms. Here, a radio frame is configured with 10 subframes having a duration of $T_{sf}=(\Delta f_{max} N_f/1000) \cdot T_c=1$ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |

(continued)

| μ | $N_{symb}^{slot}$ | $N_{slot}^{frame,μ}$ | $N_{slot}^{subframe,μ}$ |
|---|---|---|---|
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,μ}$ | $N_{slot}^{subframe,μ}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

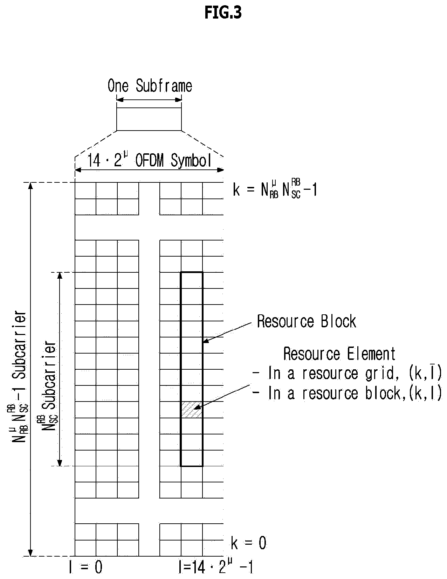

FIG. 3 illustrates a resource grid in a wireless communication system to which the present disclosure may be applied.

In reference to FIG. 3, it is illustratively described that a resource grid is configured with $N_{RB}^{μ}N_{sc}^{RB}$ subcarriers in a frequency domain and one subframe is configured with $14·2^{μ}$ OFDM symbols, but it is not limited thereto. In an NR system, a transmitted signal is described by OFDM symbols of $2^{μ}N_{symb}^{(μ)}$ and one or more resource grids configured with $N_{RB}^{μ}N_{sc}^{RB}$ subcarriers. Here, $N_{RB}^{μ}≤N_{RB}^{max,μ}$. The $N_{RB}^{max,μ}$ represents a maximum transmission bandwidth, which may be different between an uplink and a downlink as well as between numerologies.

In this case, one resource grid may be configured per μ and antenna port p. Each element of a resource grid for μ and an antenna port p is referred to as a resource element and is uniquely identified by an index pair (k,l'). Here, k=0,...,$N_{RB}^{μ}N_{sc}^{RB}$-1 is an index in a frequency domain and l'=0,...,$2^{μ}N_{symb}^{(μ)}$-1 refers to a position of a symbol in a subframe. When referring to a resource element in a slot, an index pair (k,l) is used. Here, l=0,...,$N_{symb}^{μ}$-1. A resource element (k,l') for μ and an antenna port p corresponds to a complex value, $a_{k,l'}^{(p,μ)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

[0047] - offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

[0048] - absoluteFrequencyPointA represents a frequency-position of point A expressed as in ARFCN (absolute radio-frequency channel number). Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{μ}$ and a resource element (k,l) for a subcarrier spacing configuration μ in a frequency domain is given as in the following Equation 1.

【Equation 1】

$$n_{CRB}^{μ}= \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

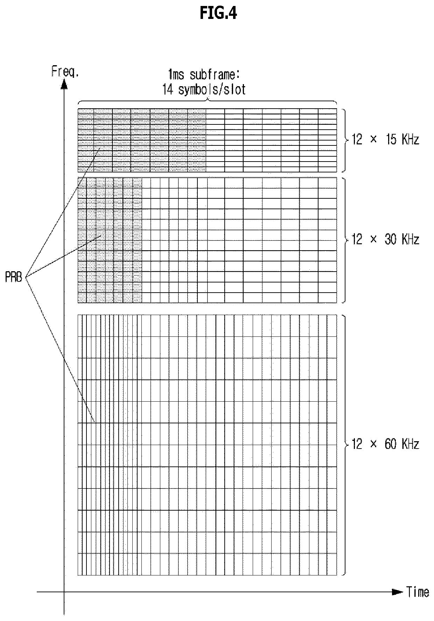

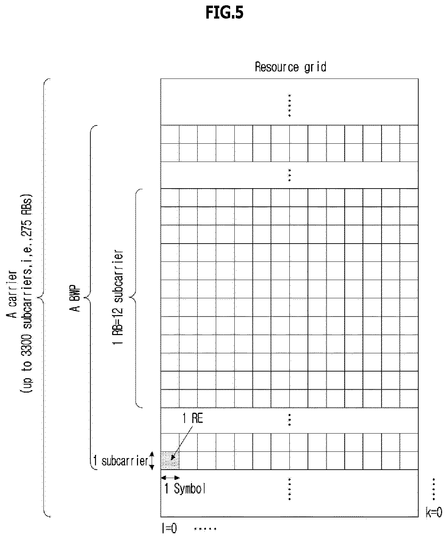

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP.

But, a configuration on a DL/UL BWP may not be received when a terminal performs an initial access procedure or before a RRC connection is set up, so a DL/UL BWP which is assumed by a terminal under these situations is defined as an initial active DL/UL BWP.

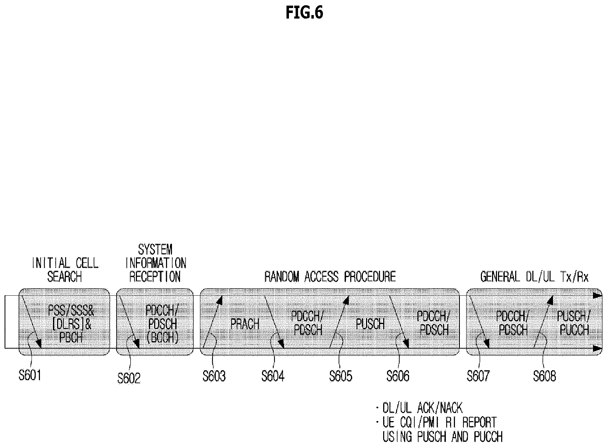

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information on the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

<u>beam management (BM)</u>

A BM procedure is L1(layer 1)/L2(layer 2) procedures to obtain and maintain a set of beams of a base station (e.g., a gNB, a TRP, etc.) and/or terminal (e.g., a UE) beams which may be used for downlink(DL) and uplink(UL) transmission/reception, it may include the following procedures and terms.

- Beam measurement: An operation that a base station or a UE measures a property of a received beamformed signal
- Beam determination: An operation that a base station or a UE selects its Tx beam / Rx beam
- Beam sweeping: An operation that a spatial region is covered by using a Tx and/or Rx beam for a certain time interval in a pre-determined method
- Beam report: An operation that a UE reports information on a beamformed signal based on beam measurement

A BM procedure may be classified into (1) a DL BM procedure using a SS(synchronization signal)/PBCH(physical broadcast channel) Block or a CSI-RS and (2) an UL BM procedure using an SRS(sounding reference signal).

In addition, each BM procedure may include Tx beam sweeping for determining a Tx Beam and Rx beam sweeping for determining a Rx beam.

Hereinafter, a DL BM procedure will be described.

A DL BM procedure may include (1) transmission of beamformed DL RSs (reference signals) of a base station (e.g., a CSI-RS or a SS Block(SSB)) and (2) beam reporting of a terminal.

Here, beam reporting may include preferred DL RS ID(identifier)(s) and corresponding L1-RSRP(Reference Signal Received Power).

The DL RS ID may be a SSBRI(SSB Resource Indicator) or a CRI(CSI-RS Resource Indicator).

Hereinafter, a DL BM procedure using an SSB will be described.

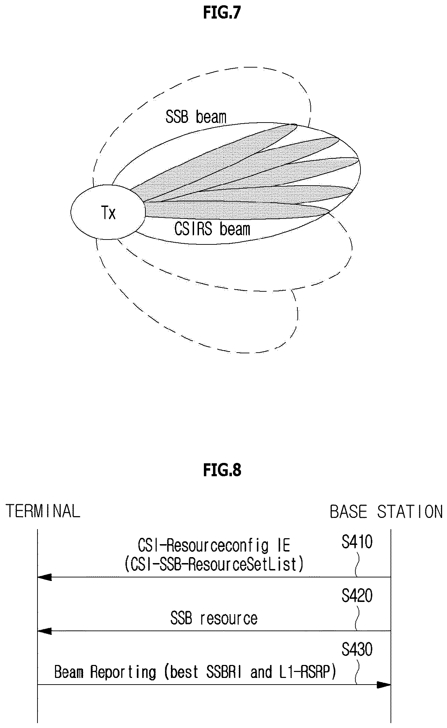

FIG. 7 is a diagram which illustrates a downlink beam management operation in a wireless communication system to which the present disclosure may be applied.

In reference to FIG. 7, an SSB beam and a CSI-RS beam may be used for beam measurement. A measurement metric is L1-RSRP per resource/block. An SSB may be used for coarse beam measurement and a CSI-RS may be used for fine beam measurement. An SSB may be used for both of Tx beam sweeping and Rx beam sweeping.

Rx beam sweeping using an SSB may be performed while an UE changes an Rx beam for the same SSBRI across a plurality of SSB bursts. In this case, one SS burst includes one or more SSBs and one SS burst set includes one or more SSB bursts.

FIG. 8 is a diagram which illustrates a downlink beam management procedure using SSB in a wireless communication system to which the present disclosure may be applied.

A configuration on a beam report using an SSB is performed in a CSI/beam configuration in a RRC connected state (or a RRC connected mode).

In reference to FIG. 8, a terminal receives CSI-ResourceConfig IE including CSI-SSB-ResourceSetList including SSB resources used for BM from a base station (S410).

Table 6 represents an example of CSI-ResourceConfig IE and as in Table 6, a BM configuration using an SSB configures an SSB like a CSI-RS resource without being separately defined.

【Table 6】

```
-- ASN1START
-- TAG-CSI-RESOURCECONFIG-START


CSI-ResourceConfig ::=              SEQUENCE {
    csi-ResourceConfigId             CSI-ResourceConfigId,
    csi-RS-ResourceSetList            CHOICE {
        nzp-CSI-RS-SSB                  SEQUENCE {
            nzp-CSI-RS-ResourceSetList        SEQUENCE (SIZE
(1..maxNrofNZP-CSI-RS-ResourceSetsPerConfig)) OF NZP-CSI-RS-ResourceSetId
OPTIONAL,
            csi-SSB-ResourceSetList           SEQUENCE (SIZE
(1..maxNrofCSI-SSB-ResourceSetsPerConfig)) OF CSI-SSB-ResourceSetId
        OPTIONAL
```

```
        },
        csi-IM-ResourceSetList                SEQUENCE (SIZE (1..maxNrofCSI-IM-
ResourceSetsPerConfig)) OF CSI-IM-ResourceSetId
        },

    bwp-Id                          BWP-Id,
    resourceType                    ENUMERATED { aperiodic, semiPersistent,
periodic },
    ...
}


-- TAG-CSI-RESOURCECONFIGTOADDMOD-STOP
-- ASN1STOP
```

In Table 6, a csi-SSB-ResourceSetList parameter represents a list of SSB resources used for beam management and reporting in one resource set. Here, an SSB resource set may be configured as {SSBx1, SSBx2, SSBx3, SSBx4, ...}. An SSB index may be defined from 0 to 63.

A terminal receives an SSB resource from the base station based on the CSI-SSB-ResourceSetList (S420).

When CSI-RS reportConfig related to a report on a SSBRI and L1-RSRP is configured, the terminal performs (beam) reporting of the best SSBRI and corresponding L1-RSRP to a base station (S430).

Hereinafter, a DL BM procedure using a CSI-RS will be described.

Describing a usage of a CSI-RS, i) a repetition parameter is configured for a specific CSI-RS resource set and when TRS_info is not configured, a CSI-RS is used for beam management, ii) when a repetition parameter is not configured and TRS_info is configured, a CSI-RS is used for a TRS(tracking reference signal). iii) when a repetition parameter is not configured and TRS_info is not configured, a CSI-RS is used for CSI acquisition.

Such a repetition parameter may be configured only for CSI-RS resource sets associated with CSI-ReportConfig having a report of L1 RSRP or 'No Report(or None)'.

If a terminal is configured with CSI-ReportConfig in which reportQuantity is configured as 'cri-RSRP' or 'none' and CSI-ResourceConfig for channel measurement (a higher layer parameter resourcesForChannelMeasurement) does not include a higher layer parameter 'trs-Info' and includes NZP-CSI-RS-ResourceSet in which a higher layer parameter 'repetition' is configured, the terminal may be configured only with a same number of port (1-port or 2-port) having a higher layer parameter 'nrofPorts' for all CSI-RS resources in NZP-CSI-RS-ResourceSet.

When (a higher layer parameter) repetition is configured as 'ON', it is related to a Rx beam sweeping procedure of a terminal. In this case, when a terminal is configured with NZP-CSI-RS-ResourceSet, the terminal may assume that at least one CSI-RS resource in NZP-CSI-RS-ResourceSet is transmitted with the same downlink spatial domain transmission filter. In other words, at least one CSI-RS resource in NZP-CSI-RS-ResourceSet is transmitted through the same Tx beam. Here, at least one CSI-RS resource in NZP-CSI-RS-ResourceSet may be transmitted in a different OFDM symbol. In addition, a terminal does not expect to receive a different periodicity in periodicityAndOffset in all CSI-RS resources in NZP-CSI-RS-Resourceset.

Meanwhile, when repetition is configured as 'OFF', it is related to a Tx beam sweeping procedure of a base station. In this case, when repetition is configured as 'OFF', a terminal does not assume that at least one CSI-RS resource in NZP-CSI-RS-ResourceSet is transmitted in the same downlink spatial domain transmission filter. In other words, at least one CSI-RS resource in NZP-CSI-RS-ResourceSet is transmitted through a different Tx beam.

In other words, when reportQuantity of the CSI-RS reportConfig IE is configured as 'ssb-Index-RSRP', a terminal reports the best SSBRI and corresponding L1-RSRP to a base station.

In addition, when a CSI-RS resource may be configured in the same OFDM symbol(s) as an SSB(SS/PBCH Block) and 'QCL-TypeD' is applicable, the terminal may assume that a CSI-RS and an SSB are quasi co-located with regard to 'QCL-TypeD'.

Here, the QCL TypeD may mean that antenna ports are quasi-colocated with regard to a spatial Rx parameter. When a terminal receives a plurality of DL antenna ports in a QCL Type D relationship, it is allowed to apply the same Rx beam. In addition, a terminal does not expect that a CSI-RS will be configured in a RE overlapped with a RE of an SSB.

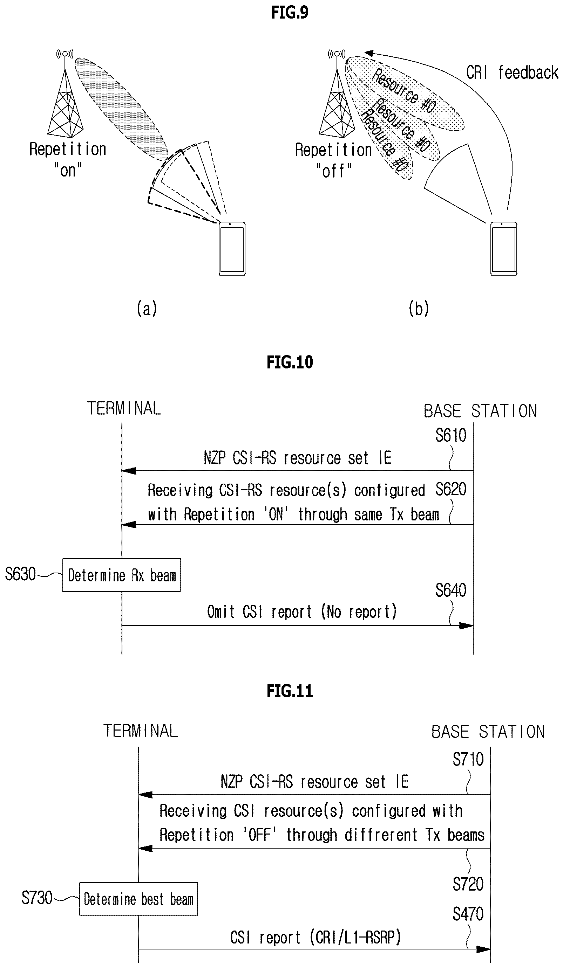

FIG. 9 is a diagram which illustrates a downlink beam management operation using CSI-RS in a wireless communication system to which the present disclosure may be applied.

FIG. 9(a) represents a Rx beam determination (or refinement) procedure of a terminal and FIG. 9(b) represents a Tx beam sweeping procedure of a base station. In addition, FIG. 9(a) is a case when a repetition parameter is configured as 'ON' and FIG. 9(b) is a case when a repetition parameter is configured as 'OFF'.

FIG. 10 is a diagram which illustrates an Rx beam determination process of a terminal in a wireless communication system to which the present disclosure may be applied.

In reference to FIG. 9(a) and FIG. 10, an Rx beam determination process of a terminal is described.

A terminal receives NZP CSI-RS resource set IE including a higher layer parameter repetition through RRC signaling from a base station (S610). Here, the repetition parameter is configured as 'ON'.

A terminal repetitively receives resources in a CSI-RS resource set configured as repetition 'ON' through the same Tx beam (or DL spatial domain transmission filter) of a base station in a different OFDM symbol (S620).

A terminal determines its Rx beam (S630).

A terminal omits a CSI report (S640). In this case, reportQuantity of a CSI report configuration may be configured as 'No report (or None)'.

In other words, the terminal may omit a CSI report when it is configured as repetition 'ON'.

FIG. 11 is a diagram which illustrates a Tx beam determination process of a base station in a wireless communication system to which the present disclosure may be applied.

In reference to FIG. 9(b) and FIG. 11, a Tx beam determination process of a base station is described.

A terminal receives NZP CSI-RS resource set IE including a higher layer parameter repetition through RRC signaling from a base station (S710). Here, the repetition parameter is configured as 'OFF' and it is related to a Tx beam sweeping procedure of a base station.

A terminal receives resources in a CSI-RS resource set configured as repetition 'OFF' through a different Tx beam (or DL spatial domain transmission filter) of a base station (S720).

A terminal selects (or determines) the best beam (S740).

A terminal reports an ID and related quality information (e.g., L1-RSRP) of a selected beam to a base station (S740). In this case, reportQuantity of a CSI report configuration may be configured as 'CRI + L1-RSRP'.

In other words, when a CSI-RS is transmitted for BM, the terminal reports a CRI and a related L1-RSRP.

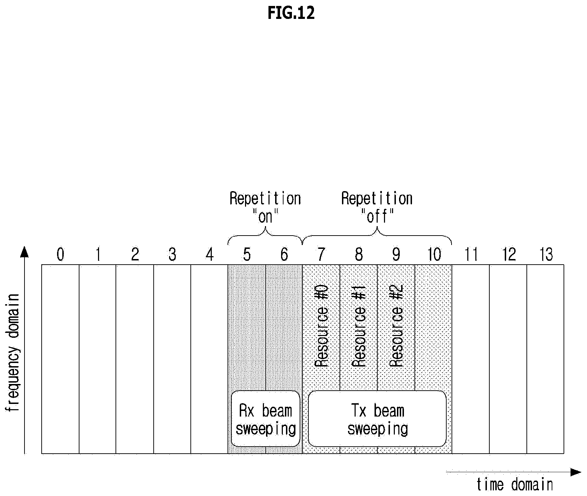

FIG. 12 is a diagram which illustrates resource allocation in a time and frequency domain related to a downlink beam management operation in a wireless communication system to which the present disclosure may be applied.

In reference to FIG. 12, it is shown that when repetition 'ON' is configured in a CSI-RS resource set, a plurality of CSI-RS resources are repetitively used by applying the same Tx beam and when repetition 'OFF' is configured in a CSI-RS resource set, different CSI-RS resources are transmitted in a different Tx beam.

Hereinafter, a beam indication method related to downlink BM will be described.

A terminal may be configured by RRC with a list of a maximum M candidate transmission configuration indication (TCI) states at least for a purpose of a QCL(Quasi Co-location) indication. Here, M may be 64.

Each TCI state may be configured as one RS set. Each ID of a DL RS at least for a spatial QCL purpose (QCL Type D) in a RS set may refer to one of DL RS types such as an SSB, a P(periodic)-CSI RS, an SP(semi-persistent)-CSI RS, an A(aperiodic)-CSI RS, etc.

An ID of DL RS(s) in a RS set used at least for a purpose of a spatial QCL may be initialized/updated at least by explicit signaling.

Table 7 illustrates a TCI-State information element (IE).

A TCI-State IE is associated with a quasi co-location (QCL) type corresponding to one or two DL reference signals (RS).

【Table 7】

```
-- ASN1START
-- TAG-TCI-STATE-START

TCI-State ::=                    SEQUENCE {
    tci-StateId                     TCI-StateId,
    qcl-Type1                       QCL-Info,
    qcl-Type2                       QCL-Info
                    OPTIONAL,    -- Need R
    ...
}


QCL-Info ::=                     SEQUENCE {
    cell                            ServCellIndex
                    OPTIONAL,    -- Need R
    bwp-Id                          BWP-Id
                    OPTIONAL, -- Cond CSI-RS-Indicated
    referenceSignal                 CHOICE {
        csi-rs                      NZP-CSI-RS-ResourceId,
        ssb                          SSB-Index
    },
    qcl-Type                        ENUMERATED {typeA, typeB, typeC, typeD},
    ...
}
```

```
-- TAG-TCI-STATE-STOP
-- ASN1STOP
```

In Table 7, a bwp-Id parameter represents a DL BWP(bandwidth part) where an RS is located, a cell parameter represents a carrier where a RS is located and a referencesignal parameter represents reference antenna port(s) which is a source of a quasi co-location for corresponding target antenna port(s) or a reference signal including it. The target antenna port(s) may be a CSI-RS, a PDCCH DMRS, or a PDSCH DMRS. In an example, a corresponding TCI state ID(identifier) may be indicated in NZP CSI-RS resource configuration information to indicate QCL reference RS information for a NZP(non-zero power) CSI-RS. In another example, a TCI state ID may be indicated to each CORESET configuration to indicate QCL reference information for PDCCH DMRS antenna port(s). In another example, a TCI state ID may be indicated through DCI to indicate QCL reference information for PDSCH DMRS antenna port(s).

Hereinafter, uplink beam management will be described.

For UL BM, beam reciprocity (or beam correspondence) between a Tx beam and a Rx beam may be valid or may not be valid according to terminal implementation. If reciprocity between a Tx beam and a Rx beam is valid both in a base station and a terminal, a UL beam pair may be matched by a DL beam pair. But, when reciprocity between a Tx beam and a Rx beam is not valid in any one of a base station and a terminal, a process for determining a UL beam pair is required separately from a DL beam pair determination.

In addition, although both of a base station and a terminal maintain beam correspondence, a base station may use a UL BM procedure for determining a DL Tx beam without requesting a terminal to report a preferred beam.

UL BM may be performed through beamformed UL SRS transmission and whether UL BM of an SRS resource set is applied may be configured by a (higher layer parameter) usage. When a usage is configured as 'BeamManagement(BM)', only one SRS resource may be transmitted in each of a plurality of SRS resource sets in a given time instant.

A terminal may be configured with one or more SRS(Sounding Reference Symbol) resource sets configured by (a higher layer parameter) SRS-ResourceSet (through higher layer signaling, RRC signaling, etc.) For each SRS resource set, a UE may be configured with K≥1 SRS resources (a higher layer parameter SRS-resource). Here, K is a natural number and the maximum number of K is indicated by SRS_capability.

Like DL BM, an UL BM procedure may be also classified into Tx beam sweeping of a terminal and Rx beam sweeping of a base station.

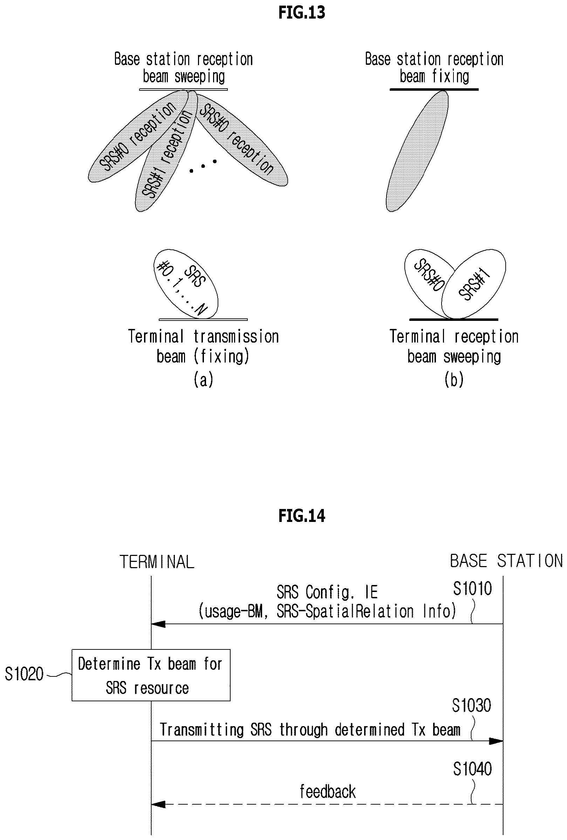

FIG. 13 is a diagram which illustrates an uplink beam management operation using SRS in a wireless communication system to which the present disclosure may be applied.

FIG. 13(a) illustrates a Rx beam determination operation of a base station and FIG. 13(b) illustrates a Tx beam sweeping operation of a terminal.

FIG. 14 is a diagram which illustrates an uplink beam management procedure in a wireless communication system to which the present disclosure may be applied.

A terminal receives RRC signaling (e.g., an SRS-Config IE) including a (higher layer parameter) usage parameter configured as 'beam management' from a base station (S1010).

Table 8 represents an example of an SRS-Config IE(Information Element) and an SRS-Config IE is used for SRS transmission configuration. An SRS-Config IE includes a list of SRS-Resources and a list of SRS-ResourceSets. Each SRS resource set means a set of SRS-resources.

A network may trigger transmission of an SRS resource set by using configured aperiodicSRS-ResourceTrigger (L1 DCI).

【Table 8】

```
-- ASN1START
-- TAG-MAC-CELL-GROUP-CONFIG-START


SRS-Config ::=                        SEQUENCE {
    srs-ResourceSetToReleaseList          SEQUENCE (SIZE(1..maxNrofSRS-
ResourceSets)) OF SRS-ResourceSetId       OPTIONAL,    -- Need N
    srs-ResourceSetToAddModList           SEQUENCE (SIZE(1..maxNrofSRS-
ResourceSets)) OF SRS-ResourceSet            OPTIONAL,    -- Need N


    srs-ResourceToReleaseList             SEQUENCE (SIZE(1..maxNrofSRS-
Resources)) OF SRS-ResourceId             OPTIONAL,    -- Need N
    srs-ResourceToAddModList              SEQUENCE (SIZE(1..maxNrofSRS-
Resources)) OF SRS-Resource               OPTIONAL,    -- Need N


    tpc-Accumulation                      ENUMERATED {disabled}
                                          OPTIONAL,    -- Need S

    ...
}


SRS-ResourceSet ::=                   SEQUENCE {
```

```
    srs-ResourceSetId                    SRS-ResourceSetId,
    srs-ResourceIdList                   SEQUENCE (SIZE(1..maxNrofSRS-
ResourcesPerSet)) OF SRS-ResourceId          OPTIONAL, -- Cond Setup
    resourceType                    CHOICE {
        aperiodic                   SEQUENCE {
            aperiodicSRS-ResourceTrigger        INTEGER (1..maxNrofSRS-
TriggerStates-1),
            csi-RS                  NZP-CSI-RS-ResourceId
OPTIONAL, -- Cond NonCodebook
            slotOffset              INTEGER (1..32)
OPTIONAL, -- Need S
            ...,
            [[
            aperiodicSRS-ResourceTriggerList        SEQUENCE
(SIZE(1..maxNrofSRS-TriggerStates-2))
                                    OF INTEGER (1..maxNrofSRS-
TriggerStates-1)  OPTIONAL  -- Need M
            ]]
        },
        semi-persistent             SEQUENCE {
            associatedCSI-RS            NZP-CSI-RS-ResourceId
OPTIONAL, -- Cond NonCodebook
            ...
        },
        periodic                    SEQUENCE {
            associatedCSI-RS            NZP-CSI-RS-ResourceId
OPTIONAL, -- Cond NonCodebook
            ...
        }
    },
    usage                       ENUMERATED {beamManagement, codebook,
nonCodebook, antennaSwitching},
    alpha                       Alpha
OPTIONAL, -- Need S
    p0                          INTEGER (-202..24)
OPTIONAL, -- Cond Setup
    pathlossReferenceRS             PathlossReferenceRS-Config
OPTIONAL, -- Need M
```

```
    srs-PowerControlAdjustmentStates        ENUMERATED { sameAsFci2,
separateClosedLoop}                              OPTIONAL, -- Need S
    ...,
    [[
    pathlossReferenceRSList-r16          SetupRelease { PathlossReferenceRSList-
r16}                          OPTIONAL  -- Need M
    ]]
}

PathlossReferenceRS-Config ::=         CHOICE {
    ssb-Index                     SSB-Index,
    csi-RS-Index                   NZP-CSI-RS-ResourceId
}
SRS-PosResourceSet-r16 ::=            SEQUENCE {
    srs-PosResourceSetId-r16           SRS-PosResourceSetId-r16,
    srs-PosResourceIdList-r16          SEQUENCE (SIZE(1..maxNrofSRS-
ResourcesPerSet)) OF SRS-PosResourceId-r16

OPTIONAL, -- Cond Setup
    resourceType-r16               CHOICE {
        aperiodic-r16                SEQUENCE {
            aperiodicSRS-ResourceTriggerList-r16      SEQUENCE
(SIZE(1..maxNrofSRS-TriggerStates-1))
                                    OF INTEGER (1..maxNrofSRS-
TriggerStates-1)          OPTIONAL, -- Need M
            ...
        },
        semi-persistent-r16              SEQUENCE {
            ...
        },
        periodic-r16                SEQUENCE {
            ...
        }
    },
    alpha-r16                    Alpha
OPTIONAL, -- Need S
    p0-r16                     INTEGER (-202..24)
OPTIONAL, -- Cond Setup
```

```
   pathlossReferenceRS-Pos-r16              CHOICE {
       ssb-IndexServing-r16                  SSB-Index,
       ssb-Ncell-r16                         SSB-InfoNcell-r16,
       dl-PRS-r16                            DL-PRS-Info-r16
   }
OPTIONAL, -- Need M

   ...
}


SRS-SpatialRelationInfo ::=        SEQUENCE {
    servingCellId                     ServCellIndex
    OPTIONAL,     -- Need S
    referenceSignal                   CHOICE {
        ssb-Index                         SSB-Index,
        csi-RS-Index                      NZP-CSI-RS-ResourceId,
        srs                                 SEQUENCE {
            resourceId                          SRS-ResourceId,
            uplinkBWP                           BWP-Id
        }
    }
}


SRS-SpatialRelationInfoPos-r16 ::=    CHOICE {
    servingRS-r16                     SEQUENCE {
        servingCellId                 ServCellIndex
OPTIONAL,   -- Need S
        referenceSignal-r16               CHOICE {
            ssb-IndexServing-r16              SSB-Index,
            csi-RS-IndexServing-r16           NZP-CSI-RS-ResourceId,
            srs-SpatialRelation-r16           SEQUENCE {
                resourceSelection-r16             CHOICE {
                    srs-ResourceId-r16                SRS-ResourceId,
                    srs-PosResourceId-r16             SRS-PosResourceId-r16
                },
                uplinkBWP-r16                 BWP-Id
            }
        }
    },
```

```
    ssb-Ncell-r16                    SSB-InfoNcell-r16,
    dl-PRS-r16                       DL-PRS-Info-r16

}


SRS-ResourceId ::=                   INTEGER (0..maxNrofSRS-Resources-1)
```

In Table 8, usage represents a higher layer parameter which indicates whether an SRS resource set is used for beam management or is used for codebook-based or non-codebook-based transmission. A usage parameter corresponds to a L1 parameter 'SRS-SetUse'. 'spatial RelationInfo' is a parameter which represents a configuration of a spatial relation between a reference RS and a target SRS. Here, the reference RS may be SSB, CSI-RS, or SRS corresponding to the L1 parameter 'SRS-SpatialRelationInfo'. Above, usage is set for each SRS resource set.

If SRS is set by 'SRS-PosResourceSet-r16', the reference RS may correspond to a DL PRS (Positioning reference signal), and usage may be configured for each SRS resource set.

A terminal determines a Tx beam for an SRS resource which will be transmitted based on SRS-SpatialRelation Info included in the SRS-Config IE (S1020). Here, SRS-SpatialRelation Info is configured per SRS resource and represents whether the same beam as a beam used in a SSB, a CSI-RS or a SRS will be applied per SRS resource. In addition, SRS-SpatialRelationInfo may be configured or may not be configured for each SRS resource.

If SRS-SpatialRelationInfo is configured for an SRS resource, the same beam as a beam used in a SSB, a CSI-RS or a SRS is applied and transmitted. But, if SRS-SpatialRelationInfo is not configured for an SRS resource, the terminal randomly determines a Tx beam and transmits an SRS through the determined Tx beam (S1030).

In more detail, for a P-SRS that 'SRS-ResourceConfigType' is configured as 'periodic':

i) if SRS-SpatialRelationInfo or SRS-PosResource-r16 is set to 'SSB/PBCH', the UE may transmit the corresponding SRS resource by applying a spatial domain transmission filter that is the same as (or generated from) the spatial domain Rx filter used for reception of SSB/PBCH; or

ii) if SRS-SpatialRelationInfo or SRS-PosResource-r16 is set to 'CSI-RS', the UE may transmit the SRS resource by applying the same spatial domain transmission filter used for reception of periodic CSI-RS or SP (semi-persistent) CSI-RS; or

iii) if SRS-SpatialRelationInfo or SRS-PosResource-r16 is set to 'SRS', the UE may transmit the corresponding SRS resource by applying the same spatial domain transmission filter used for periodic SRS transmission.

iv) If spatialRelationInfoPos-r16 is set to 'PRS', the UE may transmit the corresponding SRS resource by applying the same spatial domain transmission filter used for reception of DL PRS.

Although 'SRS-ResourceConfigType' is configured as 'SP(semi-persistent)-SRS' or 'AP(aperiodic)-SRS', a beam determination and transmission operation may be applied in a way similar to the above.

Additionally, a terminal may receive or may not receive a feedback on an SRS from a base station as in the following three cases (S1040).

i) when Spatial_Relation_Info is configured for all SRS resources in a SRS resource set, a terminal transmits an SRS with a beam indicated by a base station. For example, when Spatial_Relation_Info indicates all the same SSB, CRI or SRI, a terminal repetitively transmits an SRS with the same beam. This case corresponds to FIG. 13(a) as a usage for a base station to select an Rx beam.

ii) Spatial_Relation_Info may not be configured for all SRS resources in an SRS resource set. In this case, a terminal may transmit with freely changing SRS beams. In other words, this case corresponds to FIG. 13(b) as a usage for a terminal to sweep Tx beams.

iii) Spatial_Relation_Info may be configured only for a part of SRS resources in an SRS resource set. In this case, for a configured SRS resource, an SRS may be transmitted with an indicated beam, and for a SRS resource that Spatial_Relation_Info is not configured an SRS may be transmitted by randomly applying a Tx beam by a terminal.

## BM procedure in improved wireless communication system

To ensure flexibility in beam indication in a basic wireless communication system, beams are separately indicated for each DL/UL channel/RS resource, and the indication method may be configured for each channel/RS.

In the case of the above indication method, in order to change the serving beam of multiple terminals that communicate with the base station using a single beam, the base station must indicate each terminal to change the beam for each channel/RS resource. Accordingly, there is a problem that signaling overhead may increase and beam change latency may increase.

In addition, since UL power control-related parameters (e.g., pathloss RS (PL RS)) must be changed for each UL channel/RS along with the UL beam change, signaling overhead/latency problems existed.

To resolve the problem, in improved wireless communication system, i) default spatial relation/PL RS configuration, ii) multi-CC simultaneous TCI/spatial relation update, iii) PUCCH resource group configuration based on spatial relation update, iv) MAC CE based spatial relation indication for aperiodic/semi-persistent SRS, and v) MAC CE based PL RS update for aperiodic/semi-persistent SRS and PUSCH may be applied.

Additionally, in an improved wireless communication system, the base station may configure not only RS for channel measurement but also resources for interference measurement for the terminal. The UE may measure the L1-SINR for the configured channel measurement RS and interference measurement resources, and report one or more RSs corresponding to one or more LI-SINRs with a larger value among the measured L1-SINRs.

In addition, a method described later may be applied to configure/indicate a beam in a channel/RS integrated manner for a terminal operating with a single serving beam. Hereinafter, a TCI that configures/indicates a beam in an integrated channel/RS manner for the UE will be referred to as a unified TCI state.

Specifically, the DL unified TCI state may indicate which QCL type-D RS applies for the PDCCH, PDSCH, or/and CSI-RS resources, and the UL unified TCI state may indicate the spatial relation RS (and/or PL RS) applied for PUCCH, PUSCH, and/or SRS resources.

In addition, for a UE for which beam correspondence is established (as with the default spatial relation/PL RS), since the UL spatial relation and PL RS may also be matched with the DL beam RS, the unified TCI state may be applied to both channels/RS of DL/UL. The unified TCI state that can be applied to all DL/UL channels/RS is called the joint DL/UL TCI state, and the following two modes can be supported.

i) Joint DL/UL TCI configuration/indicating mode: DL RS configured/indicated by Joint TCI state may be applied as QCL type-D RS for DL channels/RSs. As another example, the DL RS configured/indicated by the Joint TCI state may also be applied as a spatial relation RS (or/and PL RS) for UL channels/RSs. That is, when an update to the joint TCI state is indicated, the beam RS (or/and PL RS) for the corresponding DL channels/RSs and UL channels/RSs may be changed together.

ii) Separate DL and UL TCI setup/indication modes: QCL type-D source RS for DL channels/RSs is configured/indicated by DL TCI state, and the spatial relation RS (or/and PL RS) for UL channels/RSs may be configured/indicated by the UL TCI state. Here, the DL TCI state and UL TCI state may be configured/indicated separately.

The joint DL/UL TCI status may be indicated/updated through MAC-CE and/or DCI. Specifically, one or more TCI state(s) among a plurality of TCI states (i.e., TCI state pool) established by RRC signaling may be activated by MAC-CE.

When multiple TCI states are activated by MAC-CE, one TCI state among the multiple TCI states may be indicated by DCI. One TCI state among a plurality of TCI states may be indicated by DL DCI format (DCI format 1-1/1-2) (or/and DCI without PDSCH scheduling). If the DCI does not include PDSCH scheduling information, the UE may transmit an ACK for the DCI to the base station (similar to the DCI-based SPS release method).

Additionally, the UE may measure and report the optimal beam RS for each TRP. To this end, the base station may divide the beam measurement RS set/group into one or more sub-sets/sub-groups and configure them for the UE. The UE may select one or more RS(s) for each sub-set/sub-group, and report the selected RS to the base station along with its quality values (L1-RSRP, [L1-SINR]).

Beam reporting-related operations between a UE equipped with a plurality of panels and a base station

Hereinafter, for the beam reporting operation between a UE equipped with a plurality of panels and a base station, the present disclosure proposes a method for identifying the beam report and explicitly/implicitly conveying information on the panel to which it will be applied.

In a wireless communication system, operation between a UE equipped with a plurality of panels and a base station may be possible. In explaining the present disclosure, 'Panel' may correspond to a set of antenna elements, a set of antenna ports, a set of RS/channel resources, a set of antenna/beam related resources related to a specific logical index, a set of TCI state/spatial relation RS/QCL RS/pathloss RS, a set of target channels/RS resources to which specific beam/precoder related instructions are applied. etc.

Specifically, a panel entity may correspond to one or more RS resources (indexes). As an example, in the case of CSI/beam reporting, the one or more RS resources may be RSs related to measurement and/or reporting. Here, the index/indicator/ID (e.g. CRI, SSBRI, etc.) for the one or more RS resources may mean an index/indicator/ID for a reference resource related to a TCI state/spatial relation, a reference resource related to a beam/precoder, etc.

That is, the panel entity may correspond to the CSI-RS and/or SSB resource index reported in the beam reporting instance. Correspondence between the panel entity and the reported CSI-RS and/or SSB resource index may be known to the base station. And, the correspondence between the CSI-RS and/or SSB resource index and the panel entity may be determined by the UE.

Here, the above-described correspondence may mean the association between the CSI-RS and/or SSB resource index and the panel entity.

In addition, the fact that the above-described correspondence is known to the base station may mean that the index for CSI-RS and / or SSB resources and information related to the panel entity are combined / reported together to the base station.

The UE may report capability information related to the maximum number of SRS ports and/or coherence type for each panel entity to the base station. Multiple codebook-based SRS resource sets with different maximum numbers of SRS ports may be configured/supported for the UE. Here, the indicated SRI is based on SRS resources corresponding to one SRS resource set, and the SRS resource set may be aligned with UE capabilities for panel entities.

As another example, the RS resource for beam indication may be a source RS for UL TX spatial filter information. The panel entity corresponding to one RS resource may be different and controlled by the terminal. Additionally, RS resources may be mapped to one or more panels, and one or more RS resources may correspond to one or more RS resource sets.

And, for measurement of DL and/or UL beams (e.g., DL measurement RS reception, SRS transmission, etc.), L panels among the P panels of available terminals may be activated. And, for UL transmission, one of the L activated terminal panels may be selected.

Here, the UE may report a supported UL rank list (i.e., number of UL transport layers), a list of the number of supported SRS antenna ports, and a list of coherence types indicating a subset of ports. The base station may establish an association between the UL rank index and the rank/number/coherence type of the SRS antenna port for the UE.

Additionally, for quick UL panel selection of the UE, Multiphase extraction (MPE) mitigation, TCI state updates, UE power saving, UL interference management, support for various settings across panels, UL M-TRP case may be assumed/applied.

For example, TCI state updates (based on MCE CE or/and DCI) may be used for panel selection of the UE. Here, the UE may report information about at least one panel (e.g., the state of the panel (e.g., inactive or not, whether the panel for DL/UL measurements is activated or not, whether the panel dedicated to DL/UL reception is activated, etc.)) provided in the UE. Additionally, corredpondence/linking/association between a UE panel (i.e. information to distinguish terminal panels) and CSI-RS/SSB resources or resource sets, SRS resource sets and/or PUCCH resource groups, etc. may be supported.

And, the UE may report a list of terminal capability value sets (for UE panel activation and selection). Each UE capability value set may be configured with the maximum number of SRS ports supported. At least one capability value may be different for two different sets of UE capability values, but is not limited to this and may be the same. The UE capability value set may be common across all BWP/CCs in the same band, but is not limited to this.

The correspondence between each reported CSI-RS and/or SSB resource index and one of the UE capability value sets in the reported list is determined by the UE and may be notified to the base station in the beam report instance.

The index of the UE capability value set is reported along with the SSBRI/CRI and L1-RSRP/SINR pair (e.g., up to 4 pairs, with 7 bits of absolute value and 4 bits of differential) in the beam reporting UCI, and at least one of the two options below may be applied.

Option 1: The UE may report one index for all CRI/SSBRI reported in one beam report.

Option 2: The UE may report one index for each CRI/SSBRI reported in one beam report.

As described above, a UE capability value set index (hereinafter, C-ID) is defined, and the UE may report UE capability information including information indicating how many C-IDs it has to the base station. Here, the attribute included/corresponding to the C-ID may be the maximum number of SRS ports supported by the UE for each C-ID.

In describing the present disclosure, a capability value set index (C-ID) may also be expressed as an index (ID).

That is, the C-ID in the present disclosure may refer to information/index/ID (related to terminal capabilities) to classify the maximum number of (different) SRS ports supported by the UE, as the capability information on the UE. As an example, the maximum number of SRS ports may be related to the panel or panel type.

For example, assume that panel #0 (2 ports), panel #1 (2 ports), panel #2 (4 ports), and panel #3 (4 ports) are configured for a UE (having a total of 4 panels). Here, panel #0 and panel #1 may be mapped to C-ID #0, and panel #2 and panel #3 may be mapped to C-ID #1. The UE may report C-ID #0 along with information indicating that the maximum number of SRS ports supported is 2, and C-ID #1 along with information indicating that the maximum number of SRS ports supported is 4 to the base station.

That is, the UE may transmit the C-ID and related terminal capability information (e.g., maximum number of SRS ports) to the base station as a report on the panel type.

Additionally or alternatively, a method of assigning/corresponding to a C-ID for each panel having the same number of SRS ports may be considered.

For example, assume that C-ID #0 (port 2) is mapped to panel #0, C-ID #1 (2 ports) is mapped to panel #1, C-ID #2 (2 ports) is mapped to panel #2, and C-ID#3 (2 ports) is mapped for panel #3. Here, the UE may report four C-IDs (i.e., C-ID #0 to C-ID #3). In this case, the UE may transmit the C-ID and related UE capability information (e.g., maximum number of SRS ports) to the base station as a report on the panel.

Additionally or alternatively, the UE may include the C-ID reported as a UE capability in the beam report and report it (instantaneously/periodically) to the base station.

For convenience of description of the present disclosure, the above-described reporting method (e.g., C-ID reporting method) will be called 'panel-specific beam reporting'.

If the BM procedure described above (e.g., beam reporting according to the BM procedure in basic/enhanced wireless communication systems) is established, the UE may report the index(s) of the RS (e.g., CRI or SSBRI) related to the best N base station Tx beams (regardless of the Rx panel) to the base station along with the reception quality value of the corresponding RS (e.g., L1-RSRP or/and L1-SINR).

Here, N is a value between 1 and 4 and may be configured by the base station. And, the index of the RS related to the best N base station Tx beams may mean the N RSs with the highest reception quality values among a plurality of RSs related to the base station Tx beams.

In this regard, if a panel-specific beam reporting method is configured/indicated, the UE may report the optimal C-ID (for each CRI/SSBRI) to the base station in addition to the CRI/SSBRI(s) and related L1-RSRP/L1-SINR(s) in the BM procedure described above. At this time, a mode/method of individually reporting C-ID for each CRI/SSBRI and/or a mode/method of reporting a single C-ID for all CRI/SSBRI may be applied.

The panel hereinafter referred to in relation to C-ID in the present disclosure may refer to the panel itself, or a panel type to distinguish panels with the same/similar properties (e.g., maximum number of SRS ports).

A UE that has activated (or wants to activate/use) a single panel and/or a terminal that wishes to use only one C-ID may report the same C-ID or a single C-ID for all CRI/SSBRI to the base station.

On the other hand, a UE that has activated (or wants to activate/use) multiple panels and/or wants to use multiple C-IDs may report different C-IDs to the base station for the N CRIs/SSBRIs it reports. For example, a UE set to N=4 may report the first two CRIs as C-ID#0 and the remaining two CRIs as C-ID#1.

In the above example, the UE may report, to the base station, information that i) if the base station performs transmission and reception using one of the beams corresponding to the first two CRIs, the UE prefers (or is advantageous) to perform transmission using the panel corresponding to C-ID #0 (or one of the panels), ii) if the base station performs transmission and reception using one of the beams corresponding to the remaining two CRIs, the UE may report to the base station information that it prefers (or is advantageous) to transmit using the panel corresponding to C-ID #1 (or one of the panels).

Hereinafter, for convenience of explanation, a UE that reports including multiple C-IDs is referred to as a 'multiple panel activation UE', and a UE that reports a single/same C-ID is referred to as a 'single panel activated UE'. However, even if a UE reports only one C-ID, the UE may not necessarily be a UE that activates only a single panel, but for convenience of explanation, it is referred to by the above name.

Meanwhile, with regard to panel-specific beam reporting, if the UE performs UL transmission by changing the panel or C-ID according to the report while the base station has not properly received the report, a problem may arise where the base station does not recognize the change.

As a specific example, if the UE turns off the 4-port panel (i.e., does not use it) and reports C-ID#0 to slot n after the previous C-ID#1 report in order to use the 2-port panel, the base station may not receive the report properly. In this case, the base station indicates transmit precoder matrix indicator (TPMI) / transmit rank indicator (TRI) for subsequent PUSCH transmission based on C-ID#1, that is, 4 ports, but the UE may have a problem interpreting the TPMI/TRI based on C-ID#0, that is, 2 ports.

In order to solve the problem described above, an operation in which the base station transmits a confirmation/acknowledgement(ack) message for the corresponding panel-specific beam report to the UE may be considered.

Regarding the confirmation/ack message, a method using a new message procedure or a method using an existing message/signaling procedure may be considered.

Hereinafter, the present disclosure proposes methods related to the above-described confirmation/ack message.

If there is no change in the indicator (e.g., CRI, SSBRI, etc.) and C-ID value (i.e., panel-related information) for the reference resource reported by the UE compared to the previously reported value, subsequent operation of the base station may not be necessary, and accordingly, the confirmation/ack message may be unnecessary (even if the L1-RSRP/SINR value changes).

On the other hand, if there is a change in the C-ID value reported by the UE compared to the previously reported value, in general, the preferred DL/UL TCI state information for the corresponding C-ID may change. That is, the beam-related RS (i.e., CSI-RS/SSB resources) of the preferred base station may change depending on the panel change. Accordingly, the base station that normally receives the panel-specific beam report may have a high probability of performing an update on the TCI state.

In relation to this, the present disclosure proposes the following example methods that utilize existing message/signaling methods as confirmation/ack messages without defining a separate new confirmation/ack message.

For example, the DL/UL TCI indication/update message may be used as a confirm/ack message. Here, the DL/UL TCI indication/update message may be an indication/update message based on MAC-CE and/or DCI.

In the case of this example, even if the UE's panel and/or C-ID changes, the beam-related RS of the preferred base station may be the same, and in that case, the DL/UL TCI indication/update message may be unnecessary.

As a specific example, if the UE wants to deactivate C-ID#0 and change it to C-ID#1 while using C-ID#0 and CRI#0, the optimal CRI for C-ID#1 may still be CRI#0. At this time, the UE may report C-ID #1 and CRI #0 to the base station. That is, even if the C-ID changes, CRI#0 may still be used as DL/UL TCI state information, and changing the TCI state of the base station may not be necessary.

In relation to the above-described case, SRS resource and/or SRS resource set related indicator of the UL grant (e.g., SRI field/SRS resource set selection field in UL DCI format), RRC reset message for SRS resource(s), MAC-CE activation indication message for SRS resource(s), and/or (UL) BWP switching command (command) message may also be used as the confirmation/ack message.

The above-mentioned messages may correspond to messages of the base station related to subsequent operations after the base station receives the C-ID change information on the UE. Here, the C-ID change information may mean panel-specific beam reporting information on the UE whose C-ID value has changed (e.g., change from 4 ports to 2 ports) compared to previous C-ID related reports. When the base station receives the C-ID change information on the UE, the number of ports to be applied by the base station and/or UE may be changed through one of the examples described below.

For example, the SRS resource and/or SRS resource set-related indicator of the UL grant (e.g., SRI field/SRS resource set selection field in the UL DCI format) may be used in the confirmation/ack message described above.

Multiple SRS resources or SRS resource sets with different port numbers within the same BWP may be configured through RRC signaling, SRS resources may be selected according to the UE activation panel status through the SRI field or SRS resource set selection field of the PUSCH scheduling DCI. That is, through the SRI field or SRS resource set selection field, the SRS resource or SRS resource set corresponding to the number of ports appropriate for the UE activation panel state may be indicated to the UE.

For reference, the SRS resource set selection field may be information indicating which SRS resource set (in which order) to apply to PUSCH transmission after configuring a plurality of SRS resource sets through RRC signaling to support multi-TRP PUSCH transmission.

For another example, the RRC reconfiguration message for SRS resource(s) may be used as the confirmation/ack message described above.

SRS resources within the same BWP may have the same number of ports, and the number of ports may be changed through RRC reconfiguration for SRS resources. That is, SRS resources corresponding to the number of ports appropriate for the UE activation panel state may be configured through RRC reconfiguration of SRS resources.

As another example, the MAC-CE activation indication message for SRS resource(s) may be used as the confirmation/ack message described above.

Multiple SRS resources or SRS resource sets with different port numbers within the same BWP may be configured through RRC signaling, through MAC-CE, and some SRS resource(s) or SRS resource set(s) (corresponding to a specific number of ports) may be activated. That is, through MAC-CE, the SRS resource or SRS resource set corresponding to the number of ports appropriate for the UE activation panel status may be activated to the UE.

In this regard, the MAC-CE may be a MAC-CE that activates some SRS resource set(s) among a plurality of SRS resource sets. Additionally or alternatively, the MAC-CE may include an indicating operation to deactivate some SRS resource(s) or SRS resource set(s). The MAC-CE may be a new MAC-CE or a predefined MAC-CE (e.g., MAC-CE for SRS spatialRelationInfo update) and may be a MAC-CE that has partially changed the predefined MAC-CE.

As another example, the (UL) BWP switching command message may be used as the confirmation/ack message.

SRS resources within the same BWP may have the same number of ports, and SRS resource(s) with different numbers of ports may be configured for different (UL) BWPs. Afterwards, BWP switching may be performed in accordance with the reported C-ID change. That is, through BWP switching instructions, a BWP with SRS resource(s) corresponding to the number of ports appropriate for the UE activation panel status may be configured as the active BWP of the UE.

Additionally or alternatively, even if you keep the TCI state as an indicator to the same reference resource (e.g., CRI, SSBRI, etc.) the base station may be configured to (always) transmit a TCI state indication message for the purpose of confirming/acking panel-specific beam reports.

Additionally or alternatively, to (always) perform confirmation/ack via TCI state indication, the reporting format may be configured to exclude the above-mentioned 'case where the beam-related RS of the preferred base station is the same even if the UE's panel and/or C-ID is changed', or restrictions on reporting information on the UE may be defined. For example, the UE may not report multiple C-ID values together for the same CRI/SSBRI. Alternatively, the UE may not report the same CRI/SSBRI for multiple C-ID values. In other words, duplicate reporting from the UE may not be permitted.

Additionally, in relation to the above-described confirmation/ack message, application time for correspondence between reported reference resource indicators (e.g., CRI, SSBRI, etc.) and C-ID needs to be considered.

As an example, the application time may be a certain time interval (e.g., k symbols (s)/slot (s)) based on when the confirmation/ack message is transmitted. As another example, the application time may be a certain time interval (e.g., k symbols (s)/slot (s)) based on the time the UE transmits a response (e.g., ack) to the confirmation/ack message.

Here, in relation to the above example, a certain time interval (e.g., the k value) may be a specific/defined value or a value set by the base station. In the case of a value set by the base station, information on the (minimum) time interval (e.g., k value) supported by the UE may be reported to the base station as capability information on the UE.

In addition, even if the confirmation/ack message and associated application time for panel-specific beam reporting are considered/defined as described above, a multi-panel enabled UE may be ambiguous as to which C-ID among the plurality of C-IDs it reported should be used for subsequent transmission.

For example, a case where the UE reports both C-ID #0 (e.g., 2 ports) and C-ID #1 (e.g., 4 ports) for different CRI/SSBRI may be considered.

At this time, even if the base station normally receives the report information and transmits a confirmation/ack message, and the application time according to the C-ID is defined/set, the UE may be ambiguous as to which panel among the panel corresponding to C-ID#0 (e.g., 2-port panel) and the panel corresponding to C-ID#1 (e.g., 4-port panel) should be applied to transmission after the above application time. Additionally, even if the UE arbitrarily selects and uses one panel, a problem of inconsistency with the number of ports (i.e., panels) recognized by the base station may occur.

In order to solve the above-mentioned problems, hereinafter, the present disclosure proposes methods of explicitly/implicitly including information on the C-ID in the confirmation/ack message. As an example, the confirmation/ack message may be for a multi-panel activated UE, and the C-ID may correspond to a C-ID to be used for transmission and reception of the base station/UE after a certain application time.

First, an embodiment in which information on the C-ID is explicitly included in a confirmation/ack message will be described.

For example, a method of including a certain number of fields (e.g., 1-bit field, 2-bit field, etc.) in the confirm/ack message depending on the total number of C-IDs included in the report and configuring/defining the field based on the order of CRI/SSBRI reported by the terminal or the order of C-ID included in the UE's report may be considered.

As a specific example, the UE that has been assigned/received four C-IDs from C-ID#0 to C-ID#3 may report [(CRI#x, C-ID#2), (CRI#y, C-ID#2), (CRI#z, C-ID#0), (CRI#q, C-ID#0)] in certain reports.

At this time, if the field is configured based on the order of CRI/SSBRI reported by the UE, '0' in the 1-bit field (i.e. code point 0) may be mapped to C-ID#2 corresponding to the first two CRIs, and '1' (i.e. code point 1) may be mapped to C-ID#0 corresponding to the remaining CRI. Alternatively, if the field is configured based on the order of the C-ID included in the UE's report, '0' in the 1-bit field (i.e., code point 0) may be mapped to C-ID#0 and '1' (i.e., code point 1) may be mapped to C-ID#2, according to the order of C-ID#0 and C-ID#2.

As described above, a field of x bits may be configured according to the total number of C-IDs (reported by the UE or given to the UE) (where x is a positive integer), and the field may be included in the confirmation/ack message.

Next, an embodiment in which information on the C-ID is implicitly included in a confirmation/ack message will be described.

(Method 1) For example, when using the TCI state indication for confirmation/ack purposes, the base station may indicate the UE to change the RS of the TCI state/spatial relation information to one of the reported CRI/SSBRI. In this case, the UE may transmit the subsequent UL channel/RS based on the C-ID reported for the CRI/SSBRI included in the (most recent) report.

In this example, the change indication of the base station may be performed after the UE's panel-specific beam report, and the subsequent UL channel/RS may be a UL channel/RS that exists after a predefined/configured application time based on the change indication time.

(Method 2) For another example, When using the SRI indicator or SRS resource set selection indicator included in the UL grant for confirmation/ack purposes, the base station may indicate the SRS corresponding to the (specific) C-ID reported by the UE through the SRI indicator or SRS resource set selection indicator included in the UL grant. In this case, the UE may transmit not only the corresponding PUSCH but also the subsequent UL channel/RS based on the corresponding C-ID.

In this example, SRS indication of the base station may be performed after the terminal's panel-specific beam report, and the indicated SRS may be a codebook based (CB) SRS or a non-codebook based (NCB) SRS. Additionally, the subsequent UL channel/RS may be a UL channel/RS that exists after a predefined/configured application time based on the SRS indication time.

As a specific example, when the base station indicates 4-port CB SRS resources to the UE through the SRI field or SRS resource set selection field, the UE may transmit the subsequent UL channel/RS (in alignment) based on the C-ID and/or panel corresponding to the 4 ports.

(Method 3) For another example, when resource reconfiguration for SRS is used for confirmation/ack purposes, the base station can reset the SRS resource(s) corresponding to the (specific) C-ID reported by the UE. In this case, the UE may transmit the subsequent UL channel/RS based on the corresponding C-ID.

In this example, reconfiguration of the base station may be performed after a panel-specific beam report from the UE, and the SRS may be CB SRS or NCB SRS. Additionally, the subsequent UL channel/RS may be a UL channel/RS that follows from a predefined/configured application timing.

As a specific example, when the base station RRC reconfigures 2-port SRS resource(s) to 4-port SRS resource(s), the UE may (tailoredly) transmit the UL channel/RS transmitted after reconfiguration based on the C-ID and/or panel corresponding to the 4 ports. As an example, the predefined/configured application time may be a generally defined/considered RRC reconfiguration completion time.

(Method 4) For another example, when MAC-CE activation indication for SRS resource(s) is used for confirmation/ack purposes, the base station may activate the SRS resource(s) corresponding to the SRS corresponding to the (specific) C-ID reported by the UE. In this case, the UE may transmit not only the corresponding PUSCH but also the subsequent UL channel/RS based on the corresponding C-ID.

In this example, activation of the base station may be performed after a panel-specific beam report from the UE, and the SRS may be CB SRS or NCB SRS. Additionally, the subsequent UL channel/RS may be a UL channel/RS that follows from a predefined/configured application timing.

As a specific example, the predefined/configured applsication time may be defined as 'the point in time when a certain amount of time (e.g., 3 msec) has elapsed after the terminal's ACK transmission for the MAC-CE' according to the application time for the MAC-CE indication in the wireless communication system.

(Method 5) For another example, when using the BWP switching indicator for confirmation/ack purposes, the base station may indicate BWP switching to set/change the BWP corresponding to the (specific) C-ID reported by the UE to the active BWP. In this case, the UE may transmit the subsequent UL channel/RS based on the corresponding C-ID.

In this example, BWP switching indication of the base station may be performed after the panel-specific beam report of the UE, and the subsequent UL channel/RS may be a UL channel/RS that follows from a predefined/configured application timing.

As a specific example, when the base station indicates switching from a BWP with 2 port SRS resource(s) configured to a BWP with 4 port SRS resource(s) configured, the UE may (tailoredly) transmit the UL channel/RS transmitted after BWP switching based on the C-ID and/or panel corresponding to the 4 ports. As an example, the predefined/configured application time may be a generally defined/considered BWP switching completion time.

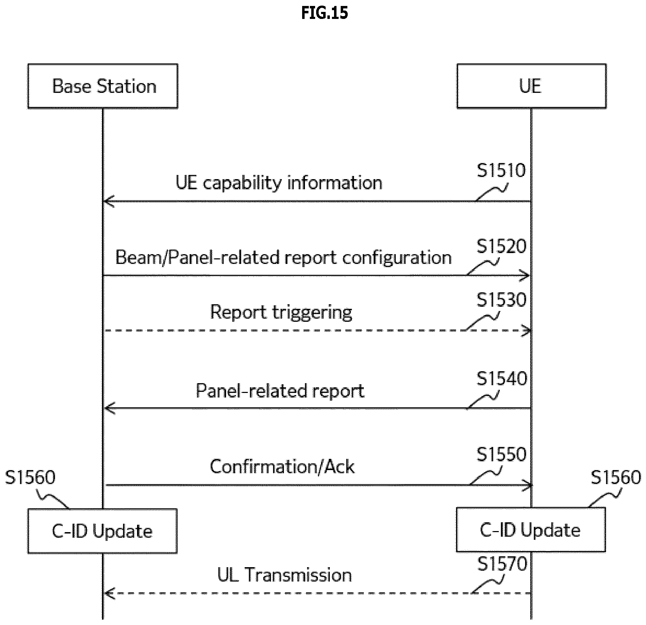

FIG. 15 illustrates a signaling procedure between a base station and a UE according to an embodiment of the present disclosure.

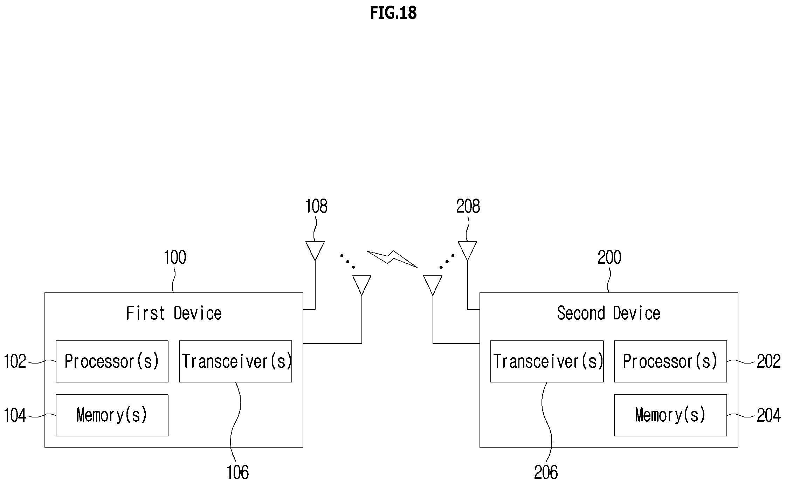

FIG. 15 shows an example of signaling between a base station and a user equipment based on the proposed methods of the present disclosure. Here, the base station/UE is only an example, and may be replaced with various devices as shown in FIG. 18 described later. FIG. 15 is merely for convenience of explanation and does not limit the scope of the present invention. Additionally, some step(s) shown in FIG. 15 may be omitted depending on the situation and/or settings.

It is assumed that the base station and/or UE in FIG. 15 supports multi-panel transmission/reception. Additionally, the panel may be a unit consisting of one or a plurality of antenna(s), antenna port(s), beam(s), and uplink/downlink channel/RS resource(s) of the UE. As an example, an uplink transmission panel may be identified based on the source RS (e.g., TCI state, spatial relation information) for the uplink channel/RS, Specifically, and it may be identified as a unit having a specific uplink/downlink resource set/group (ID) or a specific (panel-related) ID as the source RS.

Referring to FIG. 15, the UE may report UE capability information to the base station (S1510). The corresponding UE capability information may include reporting information on C-ID(s) as described above in the present disclosure. As an example, the corresponding UE capability value may include information on the maximum number of SRS ports that may be supported.

The UE may receive configuration related to beam/panel reporting from the base station (S1520). The configuration may include information on the number of CRI(s)/SSBRI(s) to be reported, measurements to report (e.g., L1-RSRP/L1-SINR, etc.), reporting type information (e.g., non-periodic reporting/semi-persistent reporting on PUSCH/semi- persistent reporting on PUCCH/periodic reporting), information related to reporting frequency and timing (e.g., periodicity, slot offset, etc.) and an indicator for C-IDs to be reported together.

Additionally, the base station may transmit a separate report triggering/activation instruction (for semi-continuous reporting or aperiodic reporting) to the UE (S1530).

The UE that has received configuration (and triggering/activation indication) related to beam/panel reporting may perform beam/panel related reporting periodically/non-periodically/semi-persistently according to the configuration (and triggering/activation) (S1540). The report may correspond to the panel-specific beam report described above in the present disclosure. information reported may include CRI(s)/SSBRI(s) and L1-RSRP(s)/L1-SINR(s), as well as C-ID(s) (for each CRI/SSBRI).

The base station that normally receives the above-described report may transmit confirmation/Ack information to the UE (S1550). The confirmation/Ack information may be a separate confirmation/Ack message defined for that purpose (e.g., explicit method), or may be replaced through predefined signaling/message such as methods 1 to 5 described above in the present disclosure (e.g., implicit method). In this regard, the base station may explicitly/implicitly indicate a specific C-ID to the UE by applying the method proposed in the present disclosure.

The UE that has received confirmation/Ack information may perform an update based on a specific C-ID after a certain period of time (S1560). The specific C-ID may be matched with the C-ID (or one of the C-IDs) included in the beam/panel related report described above (e.g., the report in step S1540). In accordance with the operation, the base station may also update the C-ID for the corresponding UE.

After the C-ID-related update operation described above, the UE may perform UL transmission by applying the corresponding C-ID (S1570). That is, the base station/UE may perform UL transmission and reception by applying the number of ports for the corresponding C-ID (after a predefined/configured application time).

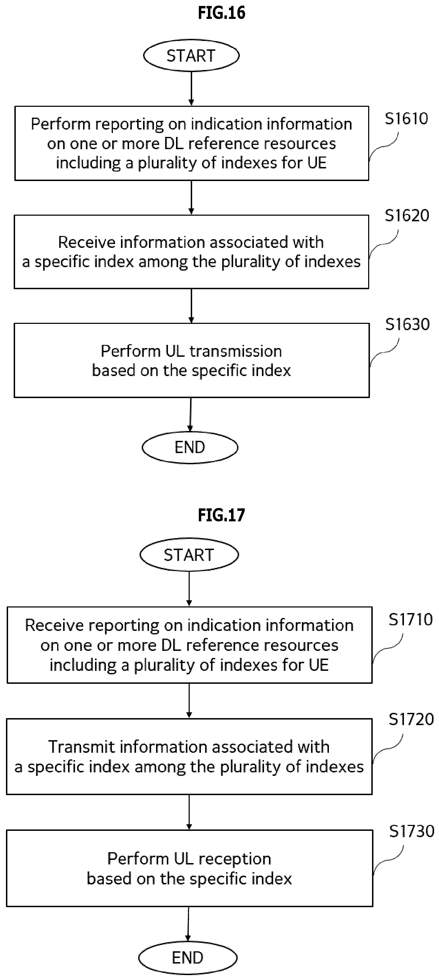

FIG. 16 is a diagram illustrating the operation of a UE for an uplink transmission and reception method according to an embodiment of the present disclosure.

FIG. 16 illustrates the operation of a UE based on the proposed methods of the present disclosure. The example in FIG. 16 is for convenience of explanation and does not limit the scope of the present disclosure. Some step(s) illustrated in FIG. 16 may be omitted depending on the situation and/or setting. Additionally, the UE in FIG. 16 is only an example and may be implemented as a device illustrated in FIG. 18 below. For example, the processors 102/202 of FIG. 18 may control transmission and reception of channels/signals/data/information, etc. using the transceivers 106/206, and may also control to store transmitted or received channels/signals/data/information, etc. in the memory 104/204.

Additionally, the operations of FIG. 16 may be processed by one or more processors 102, 202 of FIG. 18, and the operation of FIG. 16 is stored in memory (e.g., one or more memories 104, 204 of FIG. 18) in the form of instructions/programs (e.g., instructions, executable code) for driving at least one processor (e.g., 102, 202) of FIG. 18.

Referring to FIG. 16, in step S1610, the UE may report on the indication information on one or more DL reference resources including a plurality of indexes for the corresponding UE.

For example, the plurality of indexes may be related to the number of SRS ports. That is, the plurality of indexes may correspond to the C-IDs described above in the present disclosure. In other words, the plurality of indexes may correspond to capability-related indexes indicating the maximum number of SRS ports supported by the UE.

Additionally, each indication information on the one or more DL reference resources may be reported in association with one of the plurality of indexes. In this regard, the report may include at least one of an L1-RSRP value or an L1-SINR value for each indication information on the one or more DL reference resources. Here, the indication information on the one or more DL reference resources may include at least one of one or more channel state information-reference signal (CSI-RS) resource indicators (i.e., CRI) or one or more synchronization signal (SS)/physical broadcast channel (PBCH) block resource indicators (i.e., SSBRI).

In step S1620, in relation to the response to the report, the UE may receive information associated with a specific index among the plurality of indexes. As an example, the response may correspond to the confirmation/ack message described above in the present disclosure.

For example, if the information is bit information configured according to the number of the plurality of indexes, each code point of the bit information may be mapped to each of the plurality of indexes according to at least one of the order of indication information on the one or more DL reference resources or the order of the plurality of indexes.

Additionally or alternatively, if the information is a transmission configuration indicator (TCI) state indication related to a specific DL reference resource among the one or more DL reference resources, the specific index may be associated with the specific DL reference resource in the report.

Additionally or alternatively, if the information is at least one of an SRS resource-related field or an SRS resource set-related field in downlink control information (DCI), the specific index may correspond to the number of SRS ports for the SRS resource indicated by at least one of the SRS resource-related field or the SRS resource set-related field.

Additionally or alternatively, if the information is a reconfiguration based on a higher layer (e.g., RRC) for SRS resources, the specific index may correspond to the number of SRS ports for SRS resources according to the higher layer-based reconfiguration. In this case, uplink transmission based on the specific index may be performed after the upper layer-based reconfiguration is completed.

Additionally or alternatively, if the above information is a MAC-CE (medium access control-control element)-based indication for SRS resources, the specific index may correspond to the number of SRS ports for SRS resources activated by the MAC-CE based indication.

Additionally or alternatively, if the information is an indication of BWP switching to a specific bandwidth part (BWP), the specific index may correspond to the number of SRS ports for the SRS resource(s) configured in the specific BWP.

In step S1630, the UE may perform uplink transmission based on the specific index described above. That is, the UE may perform uplink transmission by applying a specific index identified/selected according to the above-described procedure.

In this regard, the corresponding uplink transmission may be performed considering the application time described above in the present disclosure. For example, uplink transmission based on the specific index may be performed after a preconfigured time interval (e.g., k symbols (s)/slot (s)) based on the timing (e.g., symbol/slot) at which the information is transmitted. Alternatively, when the UE transmits a response to the information, uplink transmission based on the specific index may be performed after a preconfigured time interval (e.g., k symbol(s)/slot(s)) based on the time when the response to the information is transmitted (e.g., symbol/slot).

FIG. 17 is a diagram illustrating the operation of a base station for an uplink transmission and reception method according to an embodiment of the present disclosure.

FIG. 17 illustrates the operation of a base station based on the proposed methods of the present disclosure. The example in FIG. 17 is for convenience of explanation and does not limit the scope of the present disclosure. Some step(s) illustrated in FIG. 17 may be omitted depending on the situation and/or setting. Additionally, the base station in FIG. 17 is only an example and may be implemented as a device illustrated in FIG. 18 below. For example, the processors 102/202 of FIG. 18 may control transmission and reception of channels/signals/data/information, etc. using the transceivers 106/206, and may also control to store transmitted or received channels/signals/data/information, etc. in the memory 104/204.

Additionally, the operations of FIG. 17 may be processed by one or more processors 102, 202 of FIG. 18, and the operation of FIG. 16 is stored in memory (e.g., one or more memories 104, 204 of FIG. 18) in the form of instructions/programs (e.g., instructions, executable code) for driving at least one processor (e.g., 102, 202) of FIG. 18.

Referring to FIG. 17, in step S1710, the base station may receive report on the indication information on one or more DL reference resources including a plurality of indexes for the corresponding UE.

For example, the plurality of indexes may be related to the number of SRS ports. That is, the plurality of indexes may correspond to the C-IDs described above in the present disclosure. In other words, the plurality of indexes may correspond to capability-related indexes indicating the maximum number of SRS ports supported by the UE.

Additionally, each indication information on the one or more DL reference resources may be reported in association with one of the plurality of indexes. In this regard, the report may include at least one of an L1-RSRP value or an L1-SINR value for each indication information on the one or more DL reference resources. Here, the indication information on the one or more DL reference resources may include at least one of one or more channel state information-reference signal (CSI-RS) resource indicators (i.e., CRI) or one or more synchronization signal (SS)/physical broadcast channel (PBCH) block resource indicators (i.e., SSBRI).

In step S1720, in relation to the response to the report, the base station may transmit information associated with a specific index among the plurality of indexes. As an example, the response may correspond to the confirmation/ack message described above in the present disclosure.

For example, if the information is bit information configured according to the number of the plurality of indexes, each code point of the bit information may be mapped to each of the plurality of indexes according to at least one of the order of indication information on the one or more DL reference resources or the order of the plurality of indexes.

Additionally or alternatively, if the information is a transmission configuration indicator (TCI) state indication related to a specific DL reference resource among the one or more DL reference resources, the specific index may be associated with the specific DL reference resource in the report.

Additionally or alternatively, if the information is at least one of an SRS resource-related field or an SRS resource set-related field in downlink control information (DCI), the specific index may correspond to the number of SRS ports for the SRS resource indicated by at least one of the SRS resource-related field or the SRS resource set-related field.

Additionally or alternatively, if the information is a reconfiguration based on a higher layer (e.g., RRC) for SRS resources, the specific index may correspond to the number of SRS ports for SRS resources according to the higher layer-based reconfiguration. In this case, uplink transmission based on the specific index may be performed after the upper layer-based reconfiguration is completed.

Additionally or alternatively, if the above information is a MAC-CE (medium access control-control element)-based indication for SRS resources, the specific index may correspond to the number of SRS ports for SRS resources activated by the MAC-CE based indication.

Additionally or alternatively, if the information is an indication of BWP switching to a specific bandwidth part (BWP), the specific index may correspond to the number of SRS ports for the SRS resource(s) configured in the specific BWP.

In step S1730, the base station may perform uplink reception based on the specific index described above. That is, the base station may perform uplink reception by applying a specific index according to the above-described procedure.

In this regard, the corresponding uplink transmission may be performed considering the application time described above in the present disclosure. For example, uplink transmission based on the specific index may be performed after a preconfigured time interval (e.g., k symbols (s)/slot (s)) based on the timing (e.g., symbol/slot) at which the information is transmitted. Alternatively, when the UE transmits a response to the information, uplink transmission based on the specific index may be performed after a preconfigured time interval (e.g., k symbol(s)/slot(s)) based on the time when the response to the information is transmitted (e.g., symbol/slot).

If applying the proposed methods described above in the present disclosure, the C-ID ambiguity problem for a multi-panel activated UE may be solved.

Additionally or alternatively, the above-described proposed methods may be applied/utilized as a confirmation/ack mechanism for panel-specific beam reporting even for single panel activated UEs. The above-described UE/base station operation may be applied not only to UEs reporting multiple C-IDs, but also to UEs reporting the same/single C-ID.

Additionally or alternatively, some of the proposed methods described above may include a case where the base station indicates to activate/(re)configure SRS resources corresponding to a plurality of C-IDs through the confirmation/ack message.

For example, in case of method 3, SRS resources corresponding to a plurality of C-IDs may be reconfigured based on RRC. For example, in case of method 4, SRS resources corresponding to multiple C-IDs may be activated through MAC-CE. For example, in case of method 5, SRS resources corresponding to multiple C-IDs may be configured/included in the switched BWP.

In this case, the UE may activate panels corresponding to a plurality of C-IDs and perform dynamic panel switching operations according to CRI/SSBRI/SRI related to each C-ID.

As a specific example, the UE may report [(CRI#x, C-ID#2), (CRI#y, C-ID#2), (CRI#z, C-ID#0), (CRI#q, C-ID#0) to the base station, and the base station may (re)configure/activate SRS resources suitable for both C-ID#0 and C-ID#2 for the UE. In this case, the UE may recognize the (re)configuration/activation message as a confirmation/ack for the panel-specific beam report according to the proposed method described above. Additionally, the UE may activate (e.g., prepare for transmission) all multiple panels corresponding to the two C-IDs (from a predefined/configured application timing).

At this time, the subsequent UL signal such as PUCCH/PUSCH/SRS may be transmitted using the C-ID associated/corresponding/reported with the source RS according to the configured/indicated source RS (e.g., RS based on spatial relation information/TCI state/SRI, etc.). Here, the configured/indicated source RS may be for each UL signal.

Additionally or alternatively, According to a specific rule, a specific C-ID (e.g., lower C-ID, C-ID with lower capabilities (e.g., smaller number of ports), etc.) among the (re)configured/activated plurality of C-IDs may be specified/configured to be applied to UL signal transmission. As an example, the method may correspond to applying the method proposed in the present disclosure to the unified TCI framework method, and may be performed until a separate TCI state indication exists.

Additionally, the method proposed in the present disclosure may be applied not only when operating based on existing TCI state and/or spatial relation information, but also when operating based on unified TCI state. In this regard, the UL channel/RS to which the proposed method in the present disclosure is applied may be a UL channel/RS to which integrated TCI is applied (e.g., all PUCCH, PUSCH, some SRS resources), or may be all UL channels/RSs regardless of whether unified TCI is applied.

Additionally, as an embodiment of the method proposed in the present disclosure, a method of utilizing unified TCI-based indication for confirmation/ack purposes may also be considered.

As an example, when confirming/acking the above-described C-ID update operation by performing an unified TCI indication through DL DCI that does not include information related to PDSCH allocation, confirmation/ack may be indicated based on specific code points or specific code point combinations in specific field(s).

Here, the specific field(s) may correspond to some field(s) among the information fields included in the DL DCI format (e.g., DCI format 1_0/1_1/1_2) but not used in connection with PDSCH allocation. As a specific example, specific field(s) may include a redundancy version (RV) field, a new data indicator (NDI) field, a modulation and coding scheme (MCS) field, a HARQ process number field, an antenna port(s) field, DMRS sequence initialization field, and/or a resource allocation related information field. Alternatively, as in the proposed method described above, an explicit information field related to confirmation/ack may be added to the DL DCI format.

Additionally or alternatively, the methods proposed in the present disclosure not only perform UL transmission after a certain timing using the corresponding C-ID and/or panel, but also be used to specify the C-ID and/or panel to be used for sidelink transmission and/or DL/sidelink transmission and reception.

General Device to which the Present Disclosure may be applied

FIG. 18 is a diagram which illustrates a block diagram of a wireless communication system according to an embodiment of the present disclosure.

In reference to FIG. 18, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/-circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.  A method performed by a user equipment (UE) in a wireless communication system, the method comprising:

    performing reporting on indication information on one or more downlink (DL) reference resources including a plurality of indexes for the UE;
    receiving information associated with a specific index among the plurality of indexes, in relation to a response to the reporting; and
    performing uplink transmission based on the specific index,
    wherein the plurality of indexes are related to a number of a sounding reference signal (SRS) ports.

2.  The method of claim 1,
    wherein the plurality of indexes correspond to capability related indexes indicating a maximum number of SRS ports supported by the UE.

3.  The method of claim 1,
    wherein each of the indication information on the one or more DL reference resources is reported in association with any one of the plurality of indexes.

4.  The method of claim 1,
    wherein the reporting includes at least one of a layer 1-reference signal received power (L1-RSRP) value or a layer 1-signal to interference and noise ratio (L1-SINR) value for each of the indication information on the one or more DL reference resources.

5.  The method of claim 1,
    wherein the uplink transmission based on the specific index is performed after a preconfigured time interval based on the timing in which the information is transmitted.

6.  The method of claim 1,
    wherein, based on a response to the information being transmitted by the UE, the uplink transmission based on the specific index is performed after a preconfigured time interval based on the timing in which the response to the information is transmitted.

7.  The method of claim 1,
    wherein, based on the information being bit information configured according to a number of the plurality of indexes, each code point of the bit information is mapped to each of the plurality of indexes according to at least one of an order of the indication information on the one or more DL reference resources or an order of the plurality of indexes.

8.  The method of claim 1,
    wherein, based on the information being a transmission configuration indicator (TCI) state indication associated with a specific DL reference resource among the one or more DL reference resources, the specific index is associated with the specific DL reference resource in the reporting.

9.  The method of claim 1,

wherein, based on the information being at least one of an SRS resource-related field or an SRS resource set-related field in downlink control information (DCI), the specific index corresponds to a number of SRS ports for a SRS resource indicated by at least one of the SRS resource-related field or the SRS resource set-related field.

10. The method of claim 1,
wherein, based on the information being a higher layer-based reconfiguration for the SRS resource, the specific index corresponds to a number of SRS ports for a SRS resource according to the higher layer-based reconfiguration.

11. The method of claim 1,
wherein the uplink transmission based on the specific index is performed after the higher layer-based reconfiguration is completed.

12. The method of claim 1,
wherein, based on the information being a medium access control-control element (MAC-CE)-based indication for a SRS resource, the specific index corresponds to a number of SRS ports for a SRS resource activated by the MAC-CE-based indication.

13. The method of claim 1,
wherein, based on the information indicating BWP switching to a specific bandwidth part (BWP), the specific index corresponds to a number of SRS ports for a SRS resource configured in the specific BWP.

14. The method of claim 1,
wherein the indication information on the one or more DL reference resources includes at least one of one or more channel state information-reference signal (CSI-RS) resource indicators or one or more synchronization signal (SS)/physical broadcast channel (PBCH) block resource indicators.

15. A user equipment (UE) in a wireless communication system, the UE comprising:

at least one transceiver; and
at least one processor connected to the at least one transceiver,
wherein the at least one processor is configured to:

perform reporting on indication information on one or more downlink (DL) reference resources including a plurality of indexes for the UE;
receive information associated with a specific index among the plurality of indexes, in relation to a response to the reporting; and
perform uplink transmission based on the specific index,
wherein the plurality of indexes are related to a number of a sounding reference signal (SRS) ports.

16. A method performed by a base station in a wireless communication system, the method comprising:

receiving reporting on indication information on one or more downlink (DL) reference resources including a plurality of indexes for a user equipment (UE);
transmitting information associated with a specific index among the plurality of indexes, in relation to a response to the reporting; and
performing uplink reception based on the specific index,
wherein the plurality of indexes are related to a number of a sounding reference signal (SRS) ports.

17. A base station performing uplink reception in a wireless communication system, the UE comprising:

at least one transceiver; and
at least one processor connected to the at least one transceiver,
wherein the at least one processor is configured to:

receive reporting on indication information on one or more downlink (DL) reference resources including a plurality of indexes for a user equipment (UE);
transmit information associated with a specific index among the plurality of indexes, in relation to a response to the reporting; and

perform uplink reception based on the specific index,

wherein the plurality of indexes are related to a number of a sounding reference signal (SRS) ports.

18. A processing device configured to control a user equipment (UE) in a wireless communication system, the processing device comprising:

at least one processor; and
at least one computer memory operatively coupled to the at least one processor and storing instructions for performing operations upon being executed by the at least one processor;
the operations include:

performing reporting on indication information on one or more downlink (DL) reference resources including a plurality of indexes for the UE;
receiving information associated with a specific index among the plurality of indexes, in relation to a response to the reporting; and
performing uplink transmission based on the specific index,
wherein the plurality of indexes are related to a number of a sounding reference signal (SRS) ports.

19. At least one non-transitory computer readable medium storing at least one instruction,
based on the at least one instruction being executed by at least one processor, an apparatus in a wireless communication system controls to:

perform reporting on indication information on one or more downlink (DL) reference resources including a plurality of indexes for the UE;
receive information associated with a specific index among the plurality of indexes, in relation to a response to the reporting; and
perform uplink transmission based on the specific index,
wherein the plurality of indexes are related to a number of a sounding reference signal (SRS) ports.

**FIG.1**

**FIG.2**

## FIG.3

**FIG.4**

**FIG.5**

**FIG.6**

INITIAL CELL SEARCH — PSS/SSS& [DL RS]& PBCH — S601

SYSTEM INFORMATION RECEPTION — PDCCH/ PDSCH (BCH) — S602

RANDOM ACCESS PROCEDURE — PRACH — S603 — PDCCH/ PDSCH — S604 — PUSCH — S605 — PDCCH/ PDSCH — S606

GENERAL DL/UL Tx/Rx — PDCCH/ PDSCH — S607 — PUSCH/ PUCCH — S608

- DL/UL ACK/NACK
- UE CQI/PMI RI REPORT USING PUSCH AND PUCCH

**FIG.7**

**FIG.8**

TERMINAL                                        BASE STATION

CSI-Resourceconfig IE          S410
(CSI-SSB-ResourceSetList)

SSB resource                   S420

Beam Reporting (best SSBRI and L1-RSRP)  S430

## FIG.9

(a)          (b)

## FIG.10

TERMINAL      BASE STATION

S610

NZP CSI-RS resource set IE

Receiving CSI-RS resource(s) configured S620
with Repetition 'ON' through same Tx beam

S630 — Determine Rx beam

S640

Omit CSI report (No report)

## FIG.11

TERMINAL      BASE STATION

S710

NZP CSI-RS resource set IE

Receiving CSI resource(s) configured with
Repetition 'OFF' through diffrerent Tx beams

S720

S730 — Determine best beam

S470

CSI report (CRI/L1-RSRP)

**FIG.12**

**FIG.13**

Base station reception
beam sweeping

Base station reception
beam fixing

Terminal transmission
beam (fixing)
(a)

Terminal reception
beam sweeping
(b)

**FIG.14**

TERMINAL                                    BASE STATION

SRS Config. IE                    S1010
(usage-BM, SRS-SpatialRelation Info)

S1020 — Determine Tx beam for
SRS resource

S1030

Transmitting SRS through determined Tx beam

S1040

feedback

**FIG.15**

**FIG.16**

START

Perform reporting on indication information
on one or more DL reference resources
including a plurality of indexes for UE — S1610

Receive information associated with
a specific index among the plurality of indexes — S1620

Perform UL transmission
based on the specific index — S1630

END

**FIG.17**

START

Receive reporting on indication information
on one or more DL reference resources
including a plurality of indexes for UE — S1710

Transmit information associated with
a specific index among the plurality of indexes — S1720

Perform UL reception
based on the specific index — S1730

END

FIG.18

EP 4 462 924 A1

## INTERNATIONAL SEARCH REPORT

International application No.

**PCT/KR2022/020805**

### A. CLASSIFICATION OF SUBJECT MATTER

**H04W 72/21**(2023.01)i; **H04W 72/23**(2023.01)i; **H04W 72/04**(2009.01)i; **H04B 7/06**(2006.01)i; **H04B 7/0413**(2017.01)i

According to International Patent Classification (IPC) or to both national classification and IPC

### B. FIELDS SEARCHED

Minimum documentation searched (classification system followed by classification symbols)

H04W 72/21(2023.01); H04L 25/02(2006.01); H04L 5/00(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다수의 인덱스들(multiple indexes), 특정 인덱스(specific index), 보고(report), 응답(response), 사운딩 참조 신호(sounding reference signal, SRS), 포트 수(number of SRS ports), 하향링크(downlink, DL), 참조 자원(reference resource), 지시 정보(indication information)

### C. DOCUMENTS CONSIDERED TO BE RELEVANT

| Category* | Citation of document, with indication, where appropriate, of the relevant passages | Relevant to claim No. |
|---|---|---|
| Y<br>A | CATT. Remaining issues on Rel-17 multi-beam operation. R1-2111221, 3GPP TSG RAN WG1 Meeting #107-e. 06 November 2021.<br>See pages 7-8. | 1-6,9-19<br>7,8 |
| Y | WO 2020-248821 A1 (QUALCOMM INC.) 17 December 2020 (2020-12-17)<br>See paragraphs [0007]-[0086]. | 1-6,9-19 |
| Y | US 2021-0176096 A1 (MITSUBISHI ELECTRIC CORP.) 10 June 2021 (2021-06-10)<br>See paragraphs [0166]-[0240] and [0626]; and figure 10. | 6,9 |
| Y | QUALCOMM INC. Discussion on SRS enhancement. R1-2112201, 3GPP TSG RAN WG1 Meeting #107-e. 06 November 2021.<br>See page 8. | 12 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 March 2023** | **30 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/020805**

**C.** **DOCUMENTS CONSIDERED TO BE RELEVANT**

| Category* | Citation of document, with indication, where appropriate, of the relevant passages | Relevant to claim No. |
|---|---|---|
| Y | VIVO. Remaining issues on Multi-TRP for PDCCH, PUCCH and PUSCH enhancements. R1-2110991, 3GPP TSG RAN WG1 Meeting #107-e. 05 November 2021. See pages 9-10; and figures 7-8. | 13 |

Form PCT/ISA/210 (second sheet) (July 2022)

## INTERNATIONAL SEARCH REPORT
### Information on patent family members

International application No.

**PCT/KR2022/020805**

| Patent document cited in search report | | | Publication date (day/month/year) | Patent family member(s) | | | Publication date (day/month/year) |
|---|---|---|---|---|---|---|---|
| WO | 2020-248821 | A1 | 17 December 2020 | CN | 113940125 | A | 14 January 2022 |
| | | | | EP | 3984311 | A1 | 20 April 2022 |
| | | | | US | 2022-0216963 | A1 | 07 July 2022 |
| | | | | WO | 2020-248158 | A1 | 17 December 2020 |
| US | 2021-0176096 | A1 | 10 June 2021 | CN | 112005594 | A | 27 November 2020 |
| | | | | EP | 3780817 | A1 | 17 February 2021 |
| | | | | WO | 2019-194021 | A1 | 10 October 2019 |

Form PCT/ISA/210 (patent family annex) (July 2022)